# DEMANDE DE BREVET EUROPEEN

(11) **EP 0 700 172 A1**
(43) Date de publication de la demande: **06.03.1996**
(21) Numéro de dépôt: 95401952.7
(22) Date de dépôt: 25.08.1995
(51) Int. Cl.: H04B 7/005

(54) **Système de transmission d'informations par un canal de transmission variant dans le temps, et équipements d'émission et de réception correspondants**

(30) Priorité: 31.08.1994 FR 9410503
(71) Demandeur: ALCATEL N.V., NL-2288 BH Rijswijk (NL); ALCATEL MOBILE COMMUNICATION FRANCE, F-75008 Paris (FR)
(72) Inventeur: Kumar, Vinod, F-75005 Paris (FR); Mourot, Christophe, F-92600 Asnieres (FR)
(74) Mandataire: Fournier, Michel

(57) **Abrégé**

Système de transmission d'informations par un canal de transmission variant dans le temps, du type dans lequel sont émises, en cours de transmission, outre les informations utiles à transmettre, des informations dites d'apprentissage permettant de réaliser, en réception, une estimation dudit canal de transmission, caractérisé en ce qu'il comporte des moyens (11) pour estimer si l'émission d'informations d'apprentissage est nécessaire au regard des variations dudit canal de transmission, et des moyens (12) pour ne transmettre des informations d'apprentissage que dans le cas où cela est estimé nécessaire.

## Description

La présente invention concerne d'une manière générale la transmission d'informations, et plus particulièrement la transmission d'informations par un canal de transmission variant dans le temps, tel qu'un canal de transmission radioélectrique par exemple, notamment pour un système de radiocommunication avec des mobiles.

Pour lutter contre les distorsions procurées par un canal de transmission, il est connu de procéder, en réception, à une estimation de ce canal de transmission (c'est-à-dire à une estimation des distorsions qu'il procure) et de corriger en conséquence la forme des signaux reçus, avant d'en extraire lesdites informations, pour en faire autant que possible des signaux sans distorsion. Notamment, dans le cas de transmission numérique, il est connu de procéder, en réception, à une estimation de la dispersion temporelle apportée par le canal de transmission, et de corriger en conséquence la forme des signaux numériques reçus, en les égalisant, pour en faire autant que possible des signaux à interférence intersymbole nulle.

Pour réaliser une estimation d'un canal de transmission il est également connu d'émettre, outre les informations dites utiles, à transmettre, des informations dites d'apprentissage, qui, à l'inverse des précédentes, sont connues à l'avance du récepteur, et qui permettent en conséquence, par comparaison entre informations attendues et informations correspondantes reçues, de réaliser ladite estimation.

Dans le cas d'un canal de transmission variant dans le temps, on ne peut pas se contenter, contrairement à ce qui est le cas pour un canal de transmission filaire par exemple, de procéder à une telle estimation une fois pour toutes en début de transmission; il est par contre nécessaire de procéder à une telle estimation également en cours de transmission.

Ainsi, par exemple dans un système de radiocommunication numérique avec des mobiles, du type à accès multiple par répartition dans le temps, tel que le système GSM ( Groupe Special Mobile) par exemple, chaque paquet (ou "burst" en anglo-saxon) mis dans l'un des intervalles de temps d'une structure de multiplex temporel caractéristique de ce système contient, outre des informations utiles, une séquence d'apprentissage.

On rappelle que la nature des informations utiles à transmettre par un système tel que le système GSM, à savoir de trafic (parole ou données) ou de signalisation, et, dans le cas de signalisation, le type de signalisation à transmettre, définit un canal dit logique, et que ladite structure de multiplex temporel comporte en l'occurrence, outre une structure de trame définissant la façon dont les canaux de transmission physiques (ou intervalles de temps de cette structure de trame) sont multiplexés temporellement, des structures de multitrame et d'hypertrame définissant la façon dont ces canaux de transmission physiques sont partagés dans le temps entre ces différents canaux logiques.

Ainsi, dans le système GSM, un paquet utilisé pour la transmission d'informations utiles relatives à un canal logique autre que les canaux de signalisation particuliers dits FCCH ("Frequency correction Channel"), SCH (Synchronisation Channel") et RACH ("Random Access Channel") comporte 26 bits de séquence d'apprentissage, contre 114 bits d'informations utiles.

Ceci a notamment pour inconvénient d'utiliser une partie non négligeable des ressources de transmission pour la transmission d'informations autres que des informations utiles.

La présente invention a notamment pour but de permettre de limiter cet inconvénient, et par conséquent d'obtenir une meilleure efficacité d'utilisation du canal de transmission, et notamment, toutes choses égales par ailleurs, une augmentation de la charge utile transmissible par le système de transmission considéré, ou encore une réduction du retard de transmission procuré par ce système, ou une réduction des interférences entre utilisateurs de ce système.

La présente invention a ainsi pour objet un système de transmission d'informations par un canal de transmission variant dans le temps, du type dans lequel sont émises, en cours de transmission, outre les informations dites utiles, à transmettre par ce système, des informations dites d'apprentissage permettant de réaliser, en réception, une estimation dudit canal de transmission, ce système étant essentiellement caractérisé en ce qu'il comporte des moyens pour estimer si l'émission d'informations d'apprentissage est nécessaire au regard des variations dudit canal de transmission, et des moyens pour ne transmettre des informations d'apprentissage que dans le cas où cela est estimé nécessaire.

D'autres objets et caractéristiques de la présente invention apparaîtront à la lecture de la description suivante d'exemples de réalisation, faite en relation avec les dessins ci-annexés dans lesquels :
- la figure 1 illustre, dans son principe, un exemple de système de transmission suivant l'invention;
- les figures 2 et 3 illustrent, dans l'application à un système de radiocommunication avec des mobiles , du type GSM, des exemples, respectivement d'équipement émetteur et d'équipement récepteur, d'un système de transmission suivant l'invention.

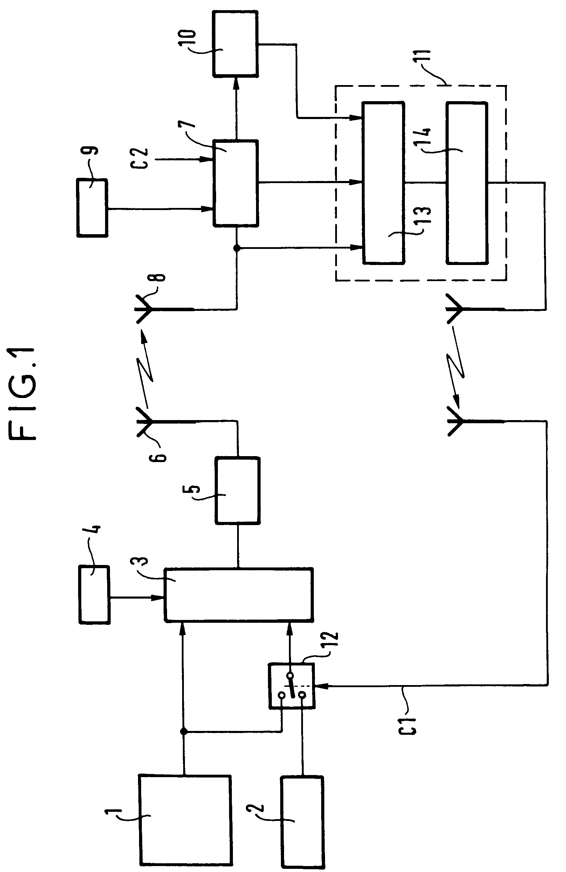

L'équipemement émetteur du système de transmission illustré sur la figure 1 comporte, de façon connue :
- des moyens 1 pour mettre les informations utiles à transmettre par ce système sous une forme adaptée à leur transmission par ce système, ces moyens 1 pouvant notamment comporter, dans l'application précitée à un système de radiocommunication avec des mobiles, tel que le système GSM, des moyens dits de codage source, des moyens dits de codage canal, et des moyens pour mettre les informations ainsi codées, dans un format compatible avec la structure de multiplex temporel précitée,
- un générateur 2 d'informations d'apprentissage,
- des moyens 3 pour sélectionner soit les informations utiles issues des moyens 1, soit les informations d'apprentissage issues du générateur 2, sous la commande d'une base de temps 4, en accord avec ladite structure de multiplex temporel dans l'exemple d'application précité,
- un modulateur 5 connecté à une antenne d'émission 6 et recevant les informations issues des moyens 3.

L'équipement récepteur du système de transmission illustré sur la figure 1 comporte, également de façon connue :
- des moyens de démodulation 7 connectés à une antenne de réception 8 et incluant en l'occurrence des moyens, non spécifiquement illustrés, pour estimer le canal de transmission (symbolisé en l'occurrence par un canal de transmission radioélectrique) à partir des informations d'apprentissage reçues, et pour corriger les signaux reçus correspondant aux informations utiles, en fonction de cette estimation, ces moyens 7 opérant sous la commande d'une base de temps 9, en accord avec ladite structure de multiplex temporel dans l'exemple d'application précité,
- des moyens 10 recevant les informations issues des moyens de démodulation 7 et réalisant une fonction inverse de celle réalisée en émission par les moyens 1.

Suivant l'invention, ce système comporte en outre :
- des moyens, 11, pour estimer si l'émission d'informations d'apprentissage est nécessaire au regard des variations du canal de transmission,
- des moyens, 12, pour ne transmettre des informations d'apprentissage que lorsque cela est estimé nécessaire.

Les moyens 11 comportent, dans l'exemple illustré sur la figure 1 :
- des moyens 13 pour évaluer la qualité de transmission par ce système,
- des moyens 14 pour détecter une dégradation de la qualité de transmission ainsi évaluée,

et les moyens 12 sont en l'occurrence des moyens permettant de ne transmettre des informations d'apprentissage qu'en présence de dégradation de la qualité de transmission.

Dans l'exemple de réalisation illustré les moyens 12 permettent en outre de transmettre des informations utiles à la place d'informations d'apprentissage lorsque la transmission de celles-ci n'est pas estimée nécessaire, c'est-à-dire en l'occurrence en l'absence de dégradation de la qualité de transmission.

Les moyens 12 sont pour cela symbolisés sur la figure 1 par un commutateur recevant d'une part les informations utiles issues des moyens 1, d'autre part les informations d'apprentissage issues du générateur 2, ce commutateur étant commandé par un signal, noté C₁, issu en l'occurrence des moyens 14 de détection de dégradation de qualité de transmission, et acheminé de l'équipement récepteur vers l'équipement émetteur par un canal dit de retour. Ce canal de retour est symbolisé également par un canal de transmission radioélectrique et pourrait par exemple, dans le cas d'un système de transmission bidirectionnel, emprunter l'autre sens de transmission de ce système.

On notera que, dans l'exemple illustré où des informations utiles peuvent être émises à la place d'informations d'apprentissage, les moyens de démodulation 7 opérent également sous la commande d'un signal de commande noté C2 indiquant si des informations utiles sont, ou non, mises à la place d'informations d'apprentissage, ce signal C2 pouvant par exemple être obtenu à partir d'informations spécifiques introduites à l'émission. D'autres exemples de génération du signal C2 seront donnés ultérieurement.

L'évaluation de la qualité de transmission dont il a été question plus haut peut être obtenue de diverses façons connues telles que par exemple :
- évaluation de rapport signal à bruit, ou de rapport signal à interférence,
- évaluation de taux d'erreur binaire,
- examen des caractéristiques estimées du canal de transmission,
- examen d'indicateurs de qualité délivrés par les moyens de démodulation dans le cas où ceux-ci délivrent, pour chaque symbole d'information numérique reçu, outre la valeur déterminée pour ce symbole, un indicateur de qualité de démodulation, ou indicateur de confiance, associé à cette valeur, (ce qui est aussi connu sous l'appellation anglo-saxonne de "soft-decision"),
- examen du comportement de l'algorithme de poursuite de l'égaliseur dans le cas de moyens de démodulation incluant un égaliseur dit à dispositif de poursuite : si le signal d'erreur qui fait normalement converger l'algorithme devient trop grand, c'est que le canal de transmission se dégrade,
- plusieurs de ces techniques simultanément.

On a illustré sur la figure 1 ces diverses possibilités par le fait que les informations nécessaires à la réalisation de ladite évaluation par les moyens 13 peuvent être constituées soit par les signaux appliqués aux moyens de démodulation 7, soit par des informations issues de ces moyens de démodulation 7, soit par des informations issues des moyens 10.

On notera que l'évaluation de taux d'erreur binaire peut, en l'absence de transmission d'informations d'apprentissage, être réalisée sur les informations utiles, dans le cas où les moyens 1 incluent un codage canal mettant en oeuvre une ou plusieurs techniques de protection contre les erreurs de transmission.

Il serait aussi possible d'émettre, à des fins d'évaluation de taux d'erreur binaire, et dans une partie de l'espace laissé libre par l'absence d'informations d'apprentissage, des informations non utiles et connues à l'avance de l'équipement récepteur. De telles informations pourraient en outre être utilisées à des fins de synchronisation temporelle de l'équipement récepteur sur l'équipement émetteur.

Suivant un autre exemple de réalisation, l'estimation du caractère nécessaire ou non de la transmission d'informations d'apprentissage pourrait résulter d'une étude préalable des conditions de propagation dans le canal de transmission considéré. Les moyens pour estimer si cette transmission est ou non nécessaire pourraient alors comporter par exemple des moyens pour déterminer si un certain délai s'est ou non écoulé depuis la dernière transmission d'informations d'apprentissage (ce délai étant déterminé au cours de ladite étude préalable).

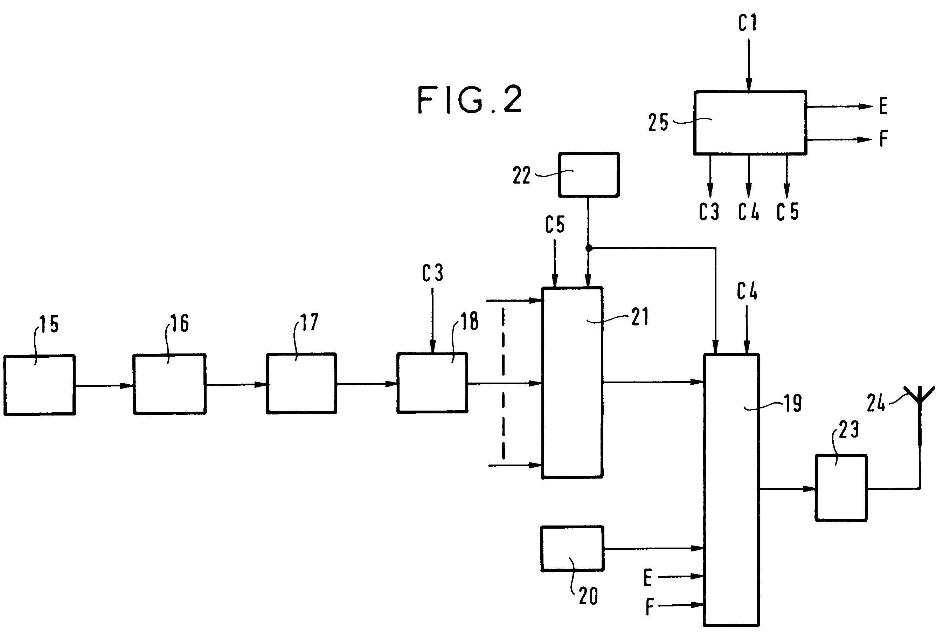

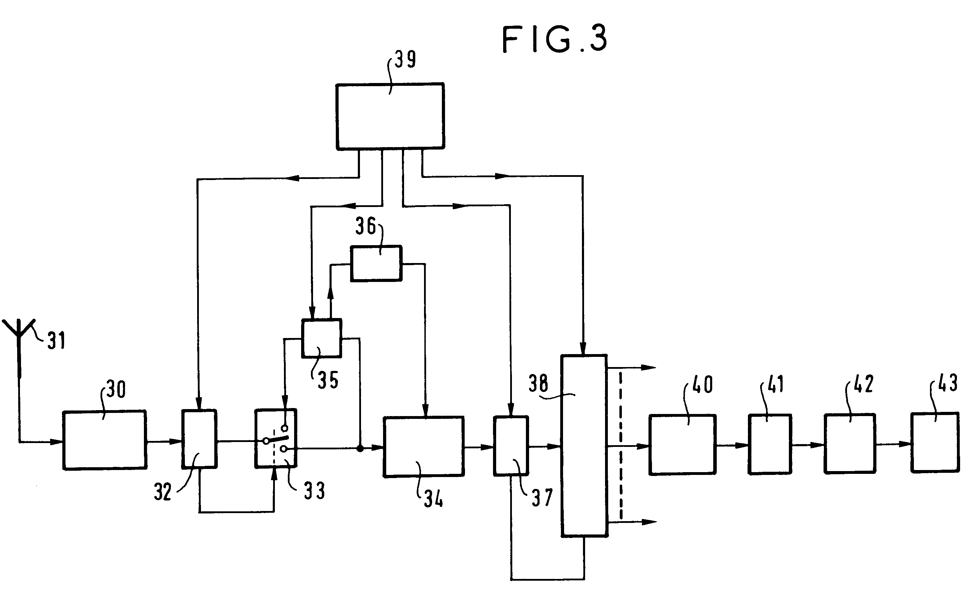

On décrit maintenant, en relation avec les figures 2 et 3, illustrant respectivement un équipement émetteur et un équipement récepteur, un exemple d'application de la présente invention à un système de radiocommunication avec des mobiles, du type GSM.

L'équipement émetteur illustré sur la figure 2 comporte des moyens pour mettre les informations utiles relatives à chaque type de canal logique susceptible d'être émis par cet équipement émetteur, sous une forme adaptée à sa transmission par ce système. Pour simplifier seuls ont été illustrés les moyens de mise en forme d'informations utiles relatives à un seul de ces canaux logiques, les autres étant similaires, et les canaux de signalisation particuliers dits FCCH, SCCH et RACH n'étant, comme indiqué plus haut, pas concernés.

Ces moyens de mise en forme comportent, de façon connue :
- un codeur source 15, délivrant des entités appelées blocs de symboles,
- un codeur canal 16 délivrant des blocs de symboles codés en vue d'une protection contre les erreurs de transmission,
- des moyens d'entrelacement 17 permettant d'entrelacer les bits des blocs codés ainsi obtenus, en vue de décorréler lesdites erreurs de transmission,
- des moyens de découpage 18 permettant de découper les blocs issus des moyens 17, en sous-blocs destinés à être répartis entre plusieurs paquets successifs.

Les sous-blocs issus des moyens de découpage 18, ou de moyens de découpage appartenant à des moyens de mise en forme relatifs à d'autres canaux logiques sont multiplexés, par un multiplexeur 19, avec des informations non utiles, et notamment avec une séquence d'apprentissage issue d'un générateur de séquence d'apprentissage 20, pour constituer des entités de transmission appelées paquets, ces paquets étant placés dans ceux des canaux de transmission physiques qui leur sont alloués pour une communication donnée par ce système.

La sélection entre sous-blocs issus des moyens de découpage 18 relatifs à un canal logique, ou sous-blocs issus de moyens de découpage relatifs à d'autres canaux logiques, est réalisée par un autre multiplexeur, 21, ces deux multiplexeurs, 19 et 21, étant commandés par une base de temps, 22, en accord avec ladite structure de multiplex temporel.

Les paquets issus du multiplexeur 19 sont, pour leur transmission sur le canal de transmission considéré, appliqués à un modulateur 23 connecté à une antenne d'émission 24.

On rappelle que, selon le système GSM , un bloc relatif à un canal autre que les canaux de signalisation particuliers dits FCCH, SCH et RACH, comporte, une fois codé en vue d'une protection contre les erreurs de transmission, 456 bits, et qu'un paquet contient deux groupes de 57 bits utiles chacun séparés par une séquence d'apprentissage de 26 bits. Les 114 bits utiles d'un paquet sont en outre formés, suivant le cas, c'est-à-dire suivant le type de canal logique, d'un ou de plusieurs sous-blocs appartenant à un ou plusieurs blocs successifs relatifs à ce canal logique, ces sous-blocs ayant, pour ce canal logique, une longueur déterminée, dite ici longueur nominale.

Suivant l'invention, et dans l'exemple tel qu'illustré sur les figures 2 et 3 où on utilise l'espace laissé libre par l'absence de séquence d'apprentissage pour transmettre des informations utiles, la longueur des sous-blocs délivrés par les moyens de découpage tels que 18 est alors variable. Ces moyens de découpage reçoivent pour cela un signal de commande, noté C3, issu d'un moyen de commande 25 recevant lui-même le signal de commande de présence ou d'absence de séquence d'apprentissage, noté, comme sur la figure 1, C1.

Les informations utiles émises dans l'espace laissé libre, dans un canal de transmission physique, par l'absence de séquence d'apprentissage, peuvent être relatives au même canal logique que celui occupant le reste de ce canal physique, ou à un canal logique différent.

Dans le cas où ces informations sont relatives au même canal logique que celui occupant le reste de ce canal physique, la longueur de sous-blocs issus de moyens de découpage tels que 18 peut être supérieure à ladite longueur nominale. Dans ce cas l'émission d'un bloc complet peut nécessiter moins de paquets que dans le cas où lesdits sous-blocs ont toujours ladite longueur nominale, d'où un possible gain en temps de transmission.

Dans le cas de transmission de parole, on ne tire cependant pas parti d'un tel gain en temps de transmission puisque, en réception, les informations de parole doivent être restituées avec un débit constant.

Dans le cas de transmission de données on peut en revanche tirer parti d'un tel gain en temps de transmission (à condition cependant que ces données ne nécessitent pas une transmission en mode circuit, auquel cas on retomberait dans le même cas que celui envisagé ci-dessus pour la transmission de parole).

Cependant, outre le fait qu'il peut être appréciable en lui-même, un tel gain en temps de transmission permet toujours de réduire le temps d'occupation du canal de transmission radioélectrique et donc de réduire les risques d'interférences avec d'autres utilisateurs.

L'espace laissé libre à l'intérieur d'un canal de transmission physique par l'absence de séquence d'apprentissage peut aussi être utilisé par un canal logique différent de celui occupant le reste de ce canal physique d'où un accroissement de la charge utile transmissible par le système.

Par exemple dans le cas où le canal logique occupant le reste de ce canal physique est un canal de trafic, il peut s'agir d'un canal de signalisation, ou d'un autre canal de trafic. Cet autre canal de trafic peut en outre être alloué pour la même communication que le précédent, ou pour une communication différente.

Dans le cas par exemple de deux telles communications faisant intervenir deux stations mobiles différentes et une même station de base dans laquelle est localisée l'équipement émetteur considéré, on suppose, par exemple pour le sens dit descendant (à savoir de cette station de base vers ces stations mobiles) que la station mobile impliquée dans ladite autre communication a été préalablement avertie de cette communication, en l'occurrence par le canal de signalisation dit PCH ("Paging Channel").

Le choix entre les différentes possibilités d'utilisation de l'espace laissé libre par l'absence de séquence d'apprentissage est effectué par le circuit de commande 25, selon des critères pré-établis, qui dépendent de l'utilisation faite du système de transmission considéré et qui ne peuvent donc être tous décrits ici. Ce circuit de commande 25 délivre, outre un signal, tel que C₃, destiné aux moyens de découpage tels que 18, des signaux de commande notés C₄, et C₅, destinés respectivement au multiplexeur 19 et au multiplexeur 21.

Pour permettre à l'équipement récepteur recevant les paquets ainsi élaborés par le multiplexeur 19, de savoir si un paquet reçu contient ou non une séquence d'apprentissage, ce multiplexeur 19 peut en outre insérer un élément binaire, ou "drapeau", noté F, en début de paquet, cet élément binaire étant réservé à une telle indication, et sa valeur étant par exemple fournie par le circuit de commande 25.

Dans le cas où la séquence d'apprentissage est automatiquement retransmise après écoulement d'un certain délai, une telle indication peut ne pas être nécessaire.

L'indication relative à la présence ou à l'absence de séquence d'apprentissage pourrait en outre, dans le cas envisagé plus haut d'émission d'informations non utiles, et connues à l'avance de l'équipement récepteur, dans une partie de l'espace laissé libre par l'absence de séquence d'apprentissage, résulter d'une corrélation faite, dans l'équipement récepteur, entre ces informations et les informations correspondantes reçues. Les informations non utiles ainsi émises seraient alors déterminées pour que le résultat d'une telle corrélation soit nettement différent suivant que cette corrélation est effectuée sur la base de ces informations ou d'informations prises sur la séquence d'apprentissage.

Pour permettre en outre à l'équipement récepteur recevant les paquets ainsi élaborés par le multiplexeur 19, de connaître, dans le cas où un paquet reçu ne contient pas de séquence d'apprentissage et où des informations utiles sont mises à la place de cette séquence d'apprentissage, la nature du canal logique occupant alors l'espace laissé libre par l'absence de séquence d'apprentissage, le multiplexeur 19 peut en outre insérer quelques éléments binaires, ou "étiquette", notée E, en début de cet espace, ces éléments binaires étant réservés à une telle indication et leur valeur étant par exemple également fournie par le circuit de commande 25.

L'équipement récepteur illustré sur la figure 3 correspond à titre d'exemple au cas où des informations de "drapeau" F et d'"étiquette" E sont introduites à l'émission et comporte, en sortie d'un démodulateur, 30, connecté à une antenne de réception 31 :
- des moyens 32 pour extraire l'élément binaire, ou drapeau, F,
- un commutateur 33 commandé par l'élément binaire F, pour aiguiller les signaux numériques issus du démodulateur 30, et correspondant aux informations reçues, moins l'élément binaire F extrait par les moyens 32, vers des moyens d'égalisation 34, soit directement en cas d'absence de séquence d'apprentissage, soit via des moyens 35 d'extraction de séquence d'apprentissage en cas de présence de séquence d'apprentissage,
- des moyens 36 d'estimation de canal de transmission, opérant à partir de la séquence d'apprentissage extraite par les moyens 35, et fournissant le résultat de cette estimation aux moyens d'égalisation 34,
- des moyens, 37, pour extraire des informations issues des moyens d'égalisation 34, les éléments binaires, ou "étiquette", E, indiquant à quel type de canal logique se rapportent les informations utiles mises à la place de la séquence d'apprentissage,
- des moyens de démultiplexage, 38, pour répartir les informations issues des moyens 37, entre un ensemble de voies de traitement correspondant chacune à un des canaux logiques susceptibles d'être reçus par cet équipement récepteur (autres, comme indiqué plus haut, que les canaux FCCH, SCH et RACH qui ne sont pas concernés), et dont une seule a, pour simplifier, été illustrée plus en détail (les autres étant similaires).

Chacun des moyens 32, 35, 37 et 38 opère sous la commande d'une base de temps 39, en accord avec ladite structure de multiplex temporel, et les moyens de démultiplexage 38 opèrent en outre sous la commande de l'étiquette E.

Chacune desdites voies de traitement relative à un canal logique donné comporte :
- des moyens, 40, pour reconstituer des blocs codés et entrelacés, à partir de sous-blocs codés et entrelacés reçus de longueur variable, et en aval de ces moyens 40, les moyens classiques réalisant les fonctions inverses de celles réalisées à l'émission, à savoir :
- des moyens de désentrelacement, 41,
- des moyens de décodage canal, 42,
- des moyens de décodage source, 43.

Contrairement au cas classique où la reconstitution de blocs codés se fait à partir de sous-blocs de longueur fixe, les moyens 40 devront en outre comporter une mémoire-tampon (non illustrée expressément sur le dessin) permettant d'absorber les sous-débits dûs notamment à la possible utilisation de l'espace laissé libre, à l'intérieur d'un canal physique, par l'absence de séquence d'apprentissage, pour y transmettre des informations utiles relatives à un canal logique autre que celui occupant le reste de ce canal physique, lesdits sous-débits étant alors ceux affectant ledit autre canal logique.

Cette mémoire-tampon permet en outre, dans le cas où les informations utiles doivent être restituées en réception avec un débit constant, d'absorber les surdébits dûs à la possible utilisation de l'espace laissé libre, à l'intérieur d'un canal de transmission physique, par l'absence de séquence d'apprentissage, pour y transmettre des informations utiles relatives au même canal logique que celui occupant le reste de ce canal physique, lesdits sur-débits étant ceux affectant ce canal logique.

Dans le cas de canal de parole, une absorption d'un sur-débit dûe à une adjonction de n bits (avec n égal par exemple à 26 dans l'application considérée ici) pourrait par ailleurs être réalisée, non pas au moyen d'une mémoire-tampon en réception, mais en supprimant, à l'émission, n bits non significatifs dans un bloc, ces n bits étant par exemple détectés comme tels par des moyens de détection de non activité vocale, et en transmettant alors un bloc réduit. Ce bloc réduit pourrait éventuellement comporter un indicateur de la façon dont ces n bits ont été supprimés, pour que le décodeur source puisse décoder correctement ce bloc réduit, suivant des techniques connues par ailleurs.

## Revendications

**1)** Système de transmission d'informations par un canal de transmission variant dans le temps, du type dans lequel sont émises, en cours de transmission, outre les informations utiles à transmettre, des informations dites d'apprentissage permettant de réaliser, en réception, une estimation dudit canal de transmission, caractérisé en ce qu'il comporte des moyens (11) pour estimer si l'émission d'informations d'apprentissage est nécessaire au regard des variations dudit canal de transmission, et des moyens (12) pour ne transmettre des informations d'apprentissage que dans le cas où cela est estimé nécessaire.

**2)** Système selon la revendication 1, caractérisé en ce que lesdits moyens pour estimer si l'émission d'informations d'apprentissage est nécessaire au regard des variations dudit canal de transmission comportent des moyens (13) pour évaluer la qualité de transmission, et des moyens (14) pour détecter une dégradation de la qualité de transmission ainsi évaluée.

**3)** Système selon la revendication 1, caractérisé en ce que lesdits moyens pour estimer si l'émission d'informations d'apprentissage est nécessaire au regard des variations dudit canal de transmission comportent des moyens pour déterminer si un certain temps s'est écoulé depuis la dernière transmission d'informations d'apprentissage.

**4)** Système selon l'un des revendications 1 à 3, caractérisé en ce qu'il comporte un canal dit de retour pour la transmission d'informations indiquant le caractère nécessaire ou non de la transmission d'informations d'apprentissage.

**5)** Système selon l'une des revendications 1 à 4, caractérisé en ce qu'il comporte en outre des moyens pour émettre des informations utiles à la place d'informations d'apprentissage dans le cas où l'émission de ces dernières n'est pas estimée nécessaire.

**6)** Système selon la revendication 5, caractérisé en ce que ledit système de transmission étant un système à multiplexage temporel d'un ensemble de canaux dits physiques dont chacun est à son tour susceptible d'être partagé dans le temps entre plusieurs canaux dits logiques, et les informations d'apprentissage n'occupant qu'une partie d'un canal physique, les informations utiles mises, dans un canal physique, à la place d'informations d'apprentissage, sont relatives au même canal logique que celui occupant le reste de ce canal physique.

**7)** Système selon la revendication 5, caractérisé en ce que ledit système de transmission étant un système à multiplexage temporel d'un ensemble de canaux dits physiques dont chacun est à son tour susceptible d'être partagé dans le temps entre plusieurs canaux dits logiques, et les informations d'apprentissage n'occupant qu'une partie d'un canal physique, les informations utiles mises, dans un canal physique, à la place d'informations d'apprentissage, sont relatives à un canal logique différent de celui occupant le reste de ce canal physique.

**8)** Système selon l'une des revendications 6 et 7, caractérisé en ce qu'il comporte, en émission, des moyens (18) pour découper les informations utiles à transmettre en tranches de longueur variable, fonction de la présence ou de l'absence d'informations d'apprentissage, et dans le cas d'absence, fonction de l'utilisation faite des emplacements laissés libres par l'absence d'informations d'apprentissage et, en réception, des moyens pour absorber les variations de débit résultantes.

**9)** Système selon l'une des revendications 1 à 8, caractérisé en ce qu'il comporte des moyens pour introduire, en émission, des informations (F) indiquant la présence ou l'absence d'informations d'apprentissage.

**10)** Système selon l'une des revendications 6 à 8, caractérisé en ce qu'il comporte des moyens pour introduire, en émission, des informations (E) indiquant la nature du canal logique auquel se rapportent des informations utiles mises à la place d'informations d'apprentissage.

**11)** Equipement de réception pour système de transmission selon l'une ou l'autre des revendications 1 à 10, caractérisé en ce qu'il comporte des moyens (11) pour estimer si l'émission d'informations d'apprentissage est nécessaire au regard des variations du canal de transmission.

**12)** Equipement de réception pour système de transmission selon la revendication 8, caractérisé en ce qu'il comporte des moyens pour absorber des variations de débit dûes au fait que les informations utiles reçues sont découpées en tranches de longueur variable.

**13)** Equipement de réception selon la revendication 12, pour système de transmission appliqué à un système de radiocommunication avec des mobiles, du type GSM, caractérisé en ce que lesdites tranches constituent des entités appelées sous-blocs.

**14)** Equipement d'émission pour système de transmission selon l'une ou l'autre des revendications 1 à 10, caractérisé en ce qu'il comporte des moyens (12) pour ne transmettre des informations d'apprentissage que dans le cas où cela est estimé nécessaire au regard des variations dudit canal de transmission.

**15)** Equipement d'émission pour système de transmission selon la revendication 8, caractérisé en ce qu'il comporte des moyens (18) pour découper les informations utiles à transmettre en tranches de longueur variable.

**16)** Equipement d'émission selon la revendication 15, pour système de transmission appliqué à un système de radiocommunication avec des mobiles, du type GSM, caractérisé en ce que lesdites tranches constituent des entités appelées sous-blocs.
